(19) Europäisches Patentamt

European Patent Office

Office européen des brevets

(11) **EP 1 715 688 A1**

(12) **EUROPEAN PATENT APPLICATION**

(43) Date of publication:
**25.10.2006 Bulletin 2006/43**

(51) Int Cl.:
***H04N 7/025*** (2006.01)

(21) Application number: **05425237.4**

(22) Date of filing: **18.04.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Clonwerk S.r.l.**
**20143 Milano (IT)**

(72) Inventor: **Scarponi, Flavio**
**20126 Milano (IT)**

(74) Representative: **Perani, Aurelio et al**
**Perani Mezzanotte & Partners**
**Piazza San Babila 5**
**20122 Milano (IT)**

(54) **Process and apparatus for encoding information in a video signal**

(57) A process and an apparatus for encoding a numerical data (DATA) in a video signal (1), which is formed by a succession of photograms (2), each photogram (2) having an active video area of N rows and M columns and being able to be subdivided into L blocks of pixels ($B_1$). The numerical data (DATA) is converted into a base B number in order to obtain a sequence of K digits ($OD_k$), a colour ($COL_k$) is associated with each digit ($OD_k$), in accordance with a pre-established digit-colour relationship, K blocks of pixels are identified from the L blocks of pixels, and each of the colours ($COL_k$) is assigned to a corresponding block of the K blocks of pixels.

FIG.1

**Description**

The present invention relates to a process for encoding information in a video signal in accordance with the preamble of claim 1. In particular, the invention relates to a process for encoding a numeric data in a video signal.

According to another aspect, the invention relates to an apparatus for encoding information in a video signal.

According to another aspect, the invention also relates to a video signal obtained by means of the encoding process and apparatus.

In the field of television transmissions, it is known to use the video signal as a carrier for transporting information, for example, numerical signals, by means of which it is possible to identify the kind of broadcast and to cause some events to be automatically generated during the reproduction of the television broadcast.

This technique of inserting information in the form of numerical data, also referred to as marking the video signal, can be used, for example, in the field of interactive services which are also available with the technology of terrestrial digital transmission.

In particular, in TV productions, the systems dedicated to the creation of the graphics insert in the video signal numerical data on the occasion of the events which will subsequently have to be processed.

In the prior art, there are a number of techniques for inserting such numerical data in the video signal or for so-called marking of the video signal. In particular, the data may be inserted outside the band of the video signal or inside that band.

With regard to the insertion of numerical data outside the band of the video signal, there are known techniques which provide for the insertion of a numerical data in the vertical blanking interval (VBI) or in the horizontal blanking interval (HBI) of the video signal. However, this approach does not ensure that the information remains unchanged after transmission. In fact, the VBI or HBI information is not considered part of the broadcast transmitted so that, during the preparation and transmission of the broadcast itself, such information can be modified in an arbitrary manner by subsequent processing of the video signal.

Similarly, the data can be inserted in the audio portion of the signal. The audio signal is processed separately from the video signal and, therefore, has many of the disadvantages of the VBI or HBI encoding. Furthermore, the audio encoding is carried out by significantly modifying the audio signal in order to allow the numerical data to be reliably and accurately recovered. However, this may bring about degradation of the audio signal which cannot be tolerated in view of the increasing demand by the user for an audio signal of extremely high quality.

Also are known techniques in which the information or numerical data are inserted in the band of the video signal by modifying the signal itself. However, those techniques are inadequate with regard to the conversions to which the signal is subjected during transmission and during compression. In particular, input/output devices of the digital type introduce signal sampling and reconstruction errors. Another source of degradation for the video signal is constituted by the compression algorithms, for example, the algorithm Mpeg, and repeated sampling of the luminance values Y and chrominance values Cb and Cr, to which the video signal is subjected during transmission, as well as the errors which are introduced by the repeaters of the signal during re-sampling of the video signal.

From the above, it is evident that known techniques for encoding numerical data in a video signal have problems when the signal is processed, compressed or transmitted after such numerical data have been inserted in the video signal itself.

An object of the present invention is to provide a process and an apparatus for encoding a numerical data in a video signal which allows the video signal generated in this manner to be made resistant to the distortions introduced into the video signal during subsequent processing to which the signal is subjected in transmission and compression steps.

This object is achieved by a process for encoding information, represented by a numerical data, in a video signal in accordance with claim 1.

According to another aspect, this object is achieved by a video signal in accordance with claim 14.

According to another aspect, this object is achieved by an apparatus for encoding information in a video signal in accordance with claim 15.

Further features and advantages of the process and apparatus according to the present invention will become clear from the following description which is given with reference to a preferred embodiment thereof, given purely by way of non-limiting example, with reference to the appended Figures, in which:

- Figure 1 is a schematic representation of a video signal in accordance with the invention,
- Figure 2 is a schematic representation of a photogram of Figure 1,
- Figure 3 is a schematic representation of the subdivision into blocks of the active video area of the photogram of Figure 2,

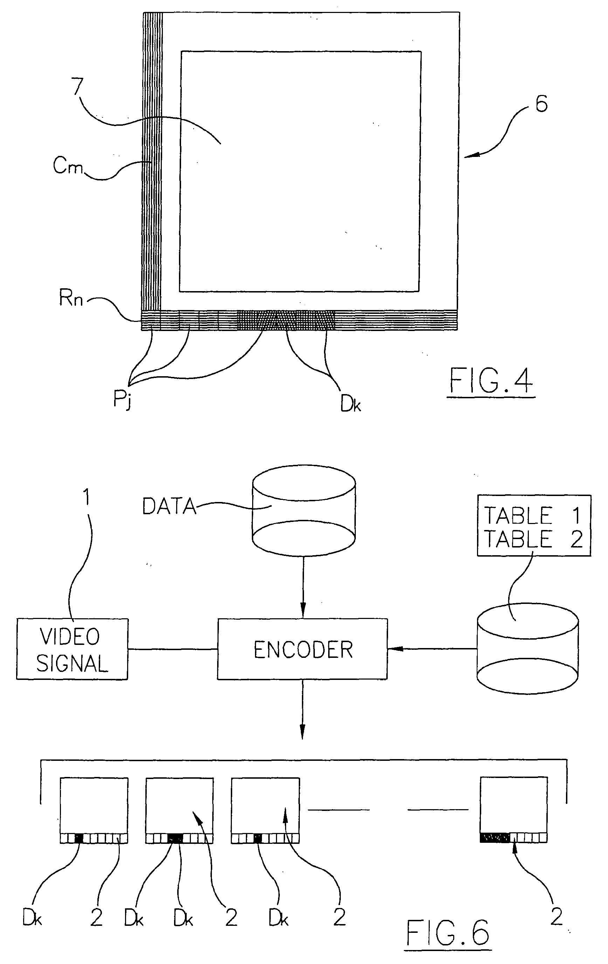

- Figure 4 is a schematic representation of the strip of blocks which is used for encoding a numerical data in the active video area of Figure 3,

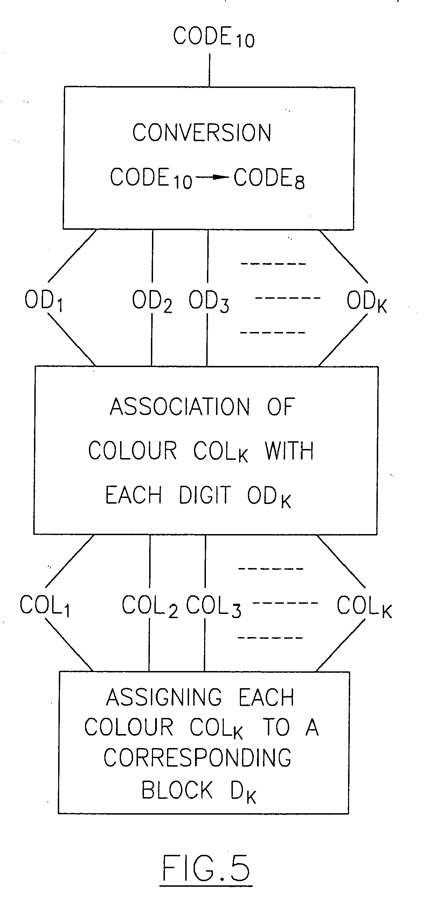

- Figure 5 is a flow diagram for the encoding process in accordance with the invention,

- Figure 6 is a block diagram of an encoding apparatus in accordance with the invention.

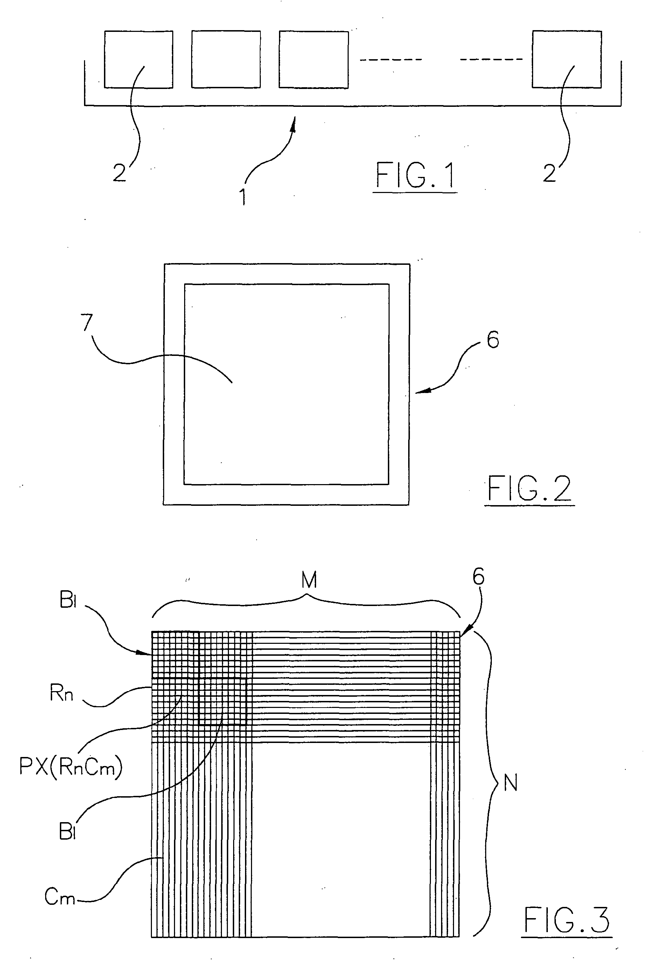

With reference to Figure 1, the flow of video data of a video signal, which is formed by a succession of single photograms 2, is generally designated 1.

The video signal 1 may be a signal transmitted via cable, or via satellite, or it may be a video signal from a video cassette recorder, a DVD reader, a video camera and the like, and it may be a digital signal or an analog signal.

In the description below, reference will be made to the portion of the video signal 1 corresponding to a single photogram 2.

In a manner known per se, the video signal of the photogram 2 has a video signal portion, which is referred to as the active video signal and which contains the visible images. The remaining portion of the video signal of the photogram 2 contains additional information which relates, for example, to the synchronisation of the signal, the vertical blanking interval VBI and horizontal blanking interval HBI, and the like.

Therefore, each photogram 2 has an active video area 6 which is determined by the active video signal portion of the video signal 1 and which is defined as the part of an image which is included within the edges of a display screen, or the visible part of the photogram 2.

However, most display screens do not show the entire active video area 6. In particular, they carry out scanning of the active video area 6 of the video signal of the photogram 2 also outside the edges of the area displayed on the television screen.

In a manner known per se, therefore, in a video system the image is kept slightly wider than the width of the screen in such a manner as to ensure that the image adapts to the entire screen.

In the production of television broadcast, it is assumed that the television screen is over-scanned by a percentage, typically 5%, at all four sides of the active video area 6.

The area contained within that percentage is defined as the safe action area and is designated 7 in the appended Figures.

The active video area 6 is structured in N rows $R_n$, where n=1..N, and M columns $C_m$, where m=1.. M, the intersection of each row $R_n$ with each column $C_m$ representing a single point of resolution or pixel PX $(R_n, C_m)$, for a total of NxM pixels PX.

The active video area 6 can also be subdivided into a predefined number L of blocks of pixels $B_l$, where 1=1..L, each block of pixels $B_l$ determining an elementary block of pixels which is intended to be used for compressing the video signal by means of a compression algorithm.

The number L of elementary blocks $B_l$ depends on the geometry of the individual block $B_l$ and the number N of rows and M of columns, into which the active video area 6 is subdivided.

Reference will be made in the remainder of the present description, in a non-limiting manner, to a compression algorithm Mpeg, wherein the elementary block of pixels $B_l$ is advantageously formed by a square of 8 x 8 pixels. Alternatively, the elementary block of pixels may be a square of P x P pixels or, alternatively, a different geometrical shape, such as, for example, a rectangle.

It is advantageous to mention that, in the case of the algorithm Mpeg-2, the active video area 6 is subdivided, during processing, into macro blocks of 16 x 16 pixels, which, in turn, are subdivided into four blocks of 8 x 8 pixels. In the case in which the signal is intended to be compressed with an algorithm Mpeg-2, therefore, the elementary block of pixels $B_l$, into which the active video area 6 is subdivided, by means of the process according to the invention, is a block of 8 x 8 pixels.

The process according to the invention allows information which is represented by a numerical data DATA to be encoded in the video signal 1.

The information may also be represented by more than one numerical data DATA. In that case, the process is applied to each piece of numerical data.

The numerical data DATA may further be encoded in the video signal of a single photogram 2 or, advantageously, encoded in the video signal of a plurality of successive photograms 2, as will be appreciated from the remainder of the present description.

Reference will be made below, in a non-limiting manner, to the process for encoding a numerical data DATA in the video signal of a single photogram 2.

The encoding process according to the invention makes provision for the numerical data DATA to be provided as a base B number in order to obtain a sequence of K digits $OD_k$, with k=1..K.

Advantageously, and as shown in the example set out herein and illustrated in the appended drawings, the numerical data DATA is provided in base 8.

If the numerical data DATA is in binary, decimal or hexadecimal format, the process provides for the numerical data DATA to be converted into a number having base B, that is, in the example, base 8. If the numerical data DATA is already provided in base 8, the process provides for the number to be provided in base 8 in order to obtain the sequence of K digits $OD_k$.

Subsequently, a colour $COL_k$ is associated with each octal digit $OD_k$ of the sequence of K digits $OD_k$, in accordance with a pre-established digit/colour relationship. The association of a colour $COL_k$ with each octal digit $OD_k$ may be carried out by using, for example, the following table which places an octal digit in relation with a corresponding colour.

**Table 1**

| Octal digit | Colour | Binary |
|---|---|---|
| 0 | Black | 000 |
| 1 | Dark Blue | 001 |
| 2 | Red | 010 |
| 3 | Magenta | 011 |
| 4 | Green | 100 |
| 5 | Light blue | 101 |
| 6 | Yellow | 110 |
| 7 | White | 111 |

For example, if the numerical data DATA is the number 1356 in base 10, its correspondent in base 8 is equal to 2514, which translates into the sequence of octal digits $OD_1=2$, $OD_2=5$, $OD_3=1$, $OD_4=4$, or the sequence of colours $COL_1$=red, $COL_2$=light blue, $COL_3$=dark blue, $COL_4$=green.

According to the process of the present invention, there are identified at least K blocks of data pixels, for example, K blocks of data pixels $D_k$, selected from the predefined number L of blocks of pixels $B_l$. At this point, each of the colours $COL_k$, to which a respective octal digit $OD_k$ corresponds, is assigned to a corresponding block of data pixels $D_k$. Therefore, a block $D_1$ of red colour, a block $D_2$ of light blue colour, a block $D_3$ of dark blue colour, and a block $D_4$ of green colour are obtained.

Evidently, the position of each single block, as well as the weight associated with each single block, must be established a priori in such a manner that, during the decoding step, the decoder is able to recover the data DATA, and therefore the information carried thereby. Advantageously, the blocks $D_k$ are arranged in correspondence with the last rows of the N rows of the active video area 6. When the elementary block of pixels $B_l$ has the format 8 x 8, the data blocks $D_k$ are arranged in the last 8 rows of the active video area 6. This may be particularly advantageous because, as mentioned above, within the active video area 6 there is determined a safe action area 7 which typically has dimensions which are 5% less than the dimensions of the active video area 6.

This allows the data to be encoded in a portion of the active video area 6 which is outside the safe action area 7, or in a portion of the active video area which is not normally displayed on the display screens because it is located outside the edges of the area displayed on the television screen.

In accordance with a preferred embodiment, there are identified not only K blocks of data pixels $D_k$, as described above, but also a plurality J of blocks of preamble pixels $P_j$, where j=1..J, whose function will be described in greater detail in the remainder of the description.

Subsequently, predefined colours $PCOL_j$ are assigned to each of the plurality J of blocks of preamble pixels $P_j$, for example, according to the methods which will be described hereinafter.

Advantageously, the blocks of pixel data $D_k$ and the blocks of preamble pixels $P_j$ are blocks of 8 x 8 pixels and are arranged in sequence in relation to the last 8 rows of the active video area 6, outside the safe action area 7, so as to determine a strip S of blocks of pixels outside the safe area 7 itself.

In the example illustrated in the appended Figures, and as described below, the strip S further has an initial elementary block and a final elementary block, which are provided, for reasons which will be set out in greater detail in the remainder of the description.

An example of the encoding process being applied according to the invention is set out below, in the case of a video signal 1 in which the visible safe area 5 is in the PAL format of 576 x 720 pixels. The numerical data DATA is encoded in the group of data of strip S having 8 x 720 pixels in the last 8 rows of the safety area, or from row 568 to row 575, if value 0 is assigned to the first row of the active area of the video signal. With the horizontal samples or the pixels of the graphic strip S being numbered from 0 to 719, the following subdivision is obtained:

**Table 2**

| Pixel interval | Colour | Reference Colour | Block of Pixels |
|---|---|---|---|
| 0 - 7 | Blank | - | - |
| 8 - 15 | 100% White | $PCOL_1$ | $P_1$ |
| 16 - 23 | Black | $PCOL_2$ | $P_2$ |
| 24 - 31 | 75% Yellow | $PCOL_3$ | $P_3$ |
| 32 - 39 | Black | $PCOL_4$ | $P_4$ |
| 40 - 47 | 75% Light blue | $PCOL_5$ | $P_5$ |
| 48 - 55 | Black | $PCOL_6$ | $P_6$ |
| 56 - 63 | 75% Green | $PCOL_7$ | $P_7$ |
| 64 - 71 | Black | $PCOL_8$ | $P_8$ |
| 72 - 79 | 75% Magenta | $PCOL_9$ | $P_9$ |
| 80 - 87 | Black | $PCOL_{10}$ | $P_{10}$ |
| 88 - 95 | 75% Red | $PCOL_{11}$ | $P_{11}$ |
| 96 - 103 | Black | $PCOL_{12}$ | $P_{12}$ |
| 104 - 111 | 75% Dark blue | $PCOL_{13}$ | $P_{13}$ |
| 112 - 119 | Black | $PCOL_{14}$ | $P_{14}$ |
| 120 - 127 | 75% White | $PCOL_{15}$ | $P_{15}$ |
| 128 - 135 | Black | $PCOL_{16}$ | $P_{16}$ |
| 136 - 711 | Data | $COL_1$-$COL_{72}$ | $D_1$-$D_{72}$ |
| 712 - 719 | Blank | - | - |

The pixel columns from 8 to 135 are dedicated to the preamble blocks $P_j$, of which there are sixteen and whose function is to allow a decoder to detect the presence of additional information in the video signal and, at the same time, to equalize the levels and the sampling thresholds for recognition of the colours of the blocks of data.

The pixel columns from 136 to 711 are dedicated to the blocks of data $D_k$ and allow insertion of 72 digits $OD_k$. Since, in the case of digits $OD_k$ in base 8, 3 bits are associated with each digit $OD_k$, there are available a total of 216 bits for each photogram 2 of the video sequence. The first block of pixels from 0 to 7 and the last block of pixels from 712 to 719 are left blank in order to prevent any occurrences of masking of the edges of the signal, carried out by devices which mix the video signal or other apparatus for processing the video signal.

The percentages 75% and 100% indicate the luminosity value of the RGB components of the element. For example, 75% light blue indicates that green equates to 192 in the range from 0-255, dark blue equates to 192 and red equates to 0.

Below is a description of an example for decoding the video signal concerned by encoding a numerical data DATA in the video signal 1, in particular in the video signal portion relating to the photogram 2, by means of the above-described process.

For each block of pixels or element $D_1$ and $P_j$, the 4 central pixels are sampled. To that end, three matrices are defined, one for each component of basic colour, red, green and dark blue.

R (sample, element)
G (sample, element)
B (sample, element)

where
sample = 0..3;
and
element = 0...89.

Taking pixel R to be the function which returns the value of the red of the video signal 1 to 720 x 576 format, repeating for k from 0 to 89 gives:

$$R\ (0,\ element)\ =\ pixelR\ (3\ +\ (element\ *\ 8),\ 571)$$

$$R\ (1,\ element)\ =\ pixelR\ (4\ +\ (element\ *\ 8),\ 571)$$

$$R\ (2,\ element)\ =\ pixelR\ (3\ +\ (element\ *\ 8),\ 572)$$

$$R\ (3,\ element)\ =\ pixelR\ (4\ +\ (element\ *\ 8),\ 572).$$

The same method is carried out for G() and B() for the value of the green and dark blue, respectively.

The values of the blocks of preamble pixels $P_j$ are also verified with respect to predefined values which are advantageously stored in a storage device, for example, a RAM, in order to speed up the verification operation.

After the validity of all sixteen preamble blocks $P_j$ has been verified, the mean value of the green is calculated from the seventh element of the preamble group, the mean value of the red is calculated from the eleventh element of the preamble group and the mean value of the dark blue is calculated from the thirteenth element of the preamble group. From those mean values, the reference values are generated which are to be used for decoding the blocks of data pixels $D_k$ of the photogram 2 in the course of decoding.

This allows consideration to be given to possible distortions introduced into the video signal 1 by devices for processing the video signal, such as repetition devices, video compression devices, video montage mixers, and the like.

Advantageously, there are re-calculated for each photogram the mean values for green, red and dark blue and the reference values for the data, in order to make the decoding operation even more reliable.

At this point, by using functions which are known per se, it is possible to decode the value of the data of each block of data pixels into a corresponding octal digit. For example:

$ValRed_k$
$ValGreen_k$
ValDark blue$_k$
return:

8 if an error is found
0 if the colour is dull
1 if the colour is bright.

The octal digit $OD_k$ which is associated with each block of data pixels $D_k$ is obtained by applying the following relationship:

$$OD_k\ =\ 4\ *\ ValGreen_k\ +\ 2\ *\ ValRed_k\ +\ ValDark\ blue_k$$

If $OD_k$ is greater than 8, that means that one or more of the components is incorrect and therefore the entire sequence is unreliable. In order to overcome that disadvantage, the numerical data DATA is encoded in the video signal 1 in a plurality of successive photograms. In that manner, when one of the photograms has been subjected to degradation such that at least one of the octal digits $OD_k$ is greater than 8, it is possible to use the subsequent photogram in order to recover the numerical data DATA which is encoded in the video sequence.

As can be appreciated from the above description, the encoding process according to the present invention meets the above-mentioned requirements and at the same time overcomes the disadvantages, to which reference was made in the introduction to the present description in relation to the prior art.

An advantage of the process and the apparatus for encoding information in a video signal according to the invention consists in that the video signal is extremely robust with respect to the distortions brought about by repeated sampling of the signal and the Mpeg compression algorithms which are applied to the video signal after the encoding of information within the video signal itself.

The encoding process of the present invention is extremely advantageous in TV productions wherein the systems, dedicated to the creation of the graphics insert in the video signal numerical data in the case of events which will have to be processed subsequently.

In the case of commercials, for example, the encoding process of the present invention allows the insertion, in each commercial, of a univocal numerical data which allows identification of the commercial and activation of the dedicated interactive contents on the channel, whether it be a digital, terrestrial or satellite channel, and signalling of the transmission which has occurred.

In the case of virtual advertising spaces, for example, the process of the present invention allows the insertion, in each photogram, of data relating to the recording telecamera. This allows superimposition of animation synchronized with the movements of the telecamera so as to give the illusion of objects really being present in the scene recorded by the telecamera.

Naturally, a person skilled in the art, in order to satisfy contingent and specific requirements, may introduce a number of modifications and variations to the process and apparatus according to the invention described above, without, however, departing from the scope of protection of the invention as defined by the appended claims.

## Claims

1. A process for encoding information, represented by a numerical data (DATA), in a video signal (1), which is formed by a succession of photograms (2), each photogram (2) having an active video area (6) determining the visible portion of the corresponding photogram (2), the active video area (6) being structured in N rows and M columns and being able to be subdivided into a predefined number L of blocks ($B_l$) of pixels, each block ($B_l$) determining the elementary block of pixels which is intended to be used for compressing the video signal by means of a compression algorithm, the process comprising, for at least one of those photograms (2), the steps of:

   a) providing the numerical data (DATA) as a base B number in order to obtain a sequence of K digits ($OD_k$),
   b) associating a colour ($COL_k$) with each digit ($OD_k$) of the sequence of K digits in accordance with a pre-established digit-colour relationship,
   c) identifying at least K blocks of data pixels ($D_k$) which are selected from the predefined number L of blocks of pixels ($B_l$),
   d) assigning each of the colours ($COL_k$) obtained in step b) to a corresponding block of data pixels ($D_k$) of the at least K blocks of data pixels.

2. A process for encoding information according to claim 1, wherein each of the elementary blocks of pixels ($B_l$) are pixel blocks having the format P x P.

3. A process for encoding information according to claim 1 or claim 2, wherein the blocks of data pixels ($D_k$) which are identified in step c) are arranged at the last P rows of the said active video area (6).

4. A process for encoding information according to any one of claims 1 to 3, wherein a safe action area (7) is provided in the active video area (6), the blocks of data pixels ($D_k$) identified in step c) being arranged outside the safe action area (7), and inside the active video area (6).

5. A process for encoding information according to claim 3 or claim 4, wherein the last P rows are arranged outside the safe action area (7), and inside the active video area (6).

6. A process for encoding information according to any one of claims 1 to 5, wherein the elementary block of pixels ($B_l$) is intended to be used for compressing the video signal (1) by means of a compression algorithm of the Mpeg type.

7. A process for encoding information according to any one of claims 1 to 6, wherein the elementary blocks of pixels ($B_l$) and the blocks of data pixels ($D_k$) identified in step c) are blocks of pixels having the format 8 x 8.

8. A process for encoding information according to any one of claims 1 to 7, wherein the numerical data (DATA) is a hexadecimal base number, the step a) providing the numerical data (DATA) as a base 8 number, by means of conversion from hexadecimal base to base 8.

9. A process for encoding information according to any one of claims 1 to 8, wherein, in step c), K blocks of data pixels ($D_k$) and a plurality J of blocks of preamble pixels ($P_j$) are identified and selected from the predefined number L of elementary blocks of pixels ($B_l$), the process further comprising the step of:

   e) assigning predefined colours ($PCOL_j$) to each of the plurality of blocks of preamble pixels ($P_j$).

10. A process for encoding information according to claim 9, wherein the plurality J of blocks of preamble pixels ($P_j$) and the K blocks of data pixels ($D_k$) are blocks of 8 x 8 pixels and are arranged in sequence at the last 8 rows of the active video area (6), outside the safe action area (7), so as to determine a strip (S) of blocks of pixels outside the safe action area (7).

11. A process for encoding information according to any one of claims 1 to 10, wherein the information is encoded in a plurality of successive photograms.

12. A process for encoding information according to any one of claims 1 to 11, wherein the information is represented by a plurality of numerical data, the process being applied to each of the plurality of numerical data.

13. A colour video signal in which information is encoded which is represented by a numerical data (DATA), by means of the encoding process according to any one of claims 1 to 12.

14. A colour video signal in which information is encoded which is represented by a numerical data (DATA), the video signal being formed by a succession of photograms (2), each photogram (2) having an active video area (6) which determines the visible portion of the corresponding photogram (2), the active video area (6) being structured in N rows and M columns and being able to be subdivided into a predefined number L of blocks of pixels ($B_l$), each block of pixels ($B_l$) determining the elementary block of pixels which is intended to be used for compressing the video signal by means of a compression algorithm, **characterized in that** at least K blocks of pixels ($D_k$) selected from the predefined number L of elementary blocks of pixels ($B_l$) are recorded with a respective colour ($COL_k$), a base B digit ($OD_k$) corresponding to the colour ($COL_k$) of each of the at least K blocks of pixels, in accordance with a pre-established digit-colour relationship, each digit ($OD_k$) being obtained by providing the numerical data (DATA) as a base B number.

15. An apparatus for encoding information, which is represented by a numerical data (DATA), in a video signal (1), which is formed by a succession of photograms (2), each photogram (2) having an active video area (6) which determines the visible portion of the corresponding photogram, the active video area (6) being structured in N rows and M columns and being able to be subdivided into a predefined number L of blocks of pixels ($B_l$), each block determining the elementary block of pixels which is intended to be used for compressing the video signal by means of a compression algorithm, the apparatus comprising processing means able to:

   - provide the numerical data (DATA) as a base B number in order to obtain a sequence of K digits ($OD_k$),
   - associate a colour ($COL_k$) with each digit ($OD_k$) of the sequence of K digits, in accordance with a pre-established digit-colour relationship,
   - identify at least K blocks of pixels selected from the predefined number L of blocks of pixels,
   - assign each of the colours ($COL_k$) to one of the at least K blocks of pixels.

16. A colour video signal in which information is encoded, which is represented by a numerical data (DATA), by means of the encoding apparatus according to claim 15.

FIG.1

FIG.2

FIG.3

7

6

Cm

Rn

Pj    Dk

## FIG.4

DATA

1

TABLE 1
TABLE 2

VIDEO
SIGNAL

ENCODER

Dk    2    Dk    Dk    2    Dk    2    2

## FIG.6

$CODE_{10}$

```
┌─────────────────────────┐
│      CONVERSION          │
│                          │
│  CODE₁₀ ──► CODE₈        │
└─────────────────────────┘
```

CONVERSION

$CODE_{10} \longrightarrow CODE_8$

$OD_1 \qquad OD_2 \; OD_3 \; ------ \qquad OD_K$

ASSOCIATION OF

COLOUR $COL_K$ WITH

EACH DIGIT $OD_K$

$COL_1 \qquad COL_2 \; COL_3 \; ------ \qquad COL_K$

ASSIGNING EACH
COLOUR $COL_K$ TO A
CORRESPONDING
BLOCK $D_K$

FIG.5

**European Patent Office**

**EUROPEAN SEARCH REPORT**

Application Number

EP 05 42 5237

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2001/017892 A1 (BARTON JAMES M ET AL) 30 August 2001 (2001-08-30) | 1-7, 11-16 | H04N7/025 |
| Y | * paragraph [0037] - paragraph [0072] * | 8,9 | |
| A | * paragraph [0084] - paragraph [0085] * ----- | 10 | |
| Y | US 6 008 857 A (KEERY ET AL) 28 December 1999 (1999-12-28) | 8,9 | |
| A | * column 3, line 57 - column 5, line 26 * | 1-7, 10-16 | |
| | * column 7, line 22 - column 8, line 23 * ----- | | |
| A | DE 101 33 600 A1 (HYPERMEDIA GMBH) 30 January 2003 (2003-01-30) * paragraph [0037] - paragraph [0047] * ----- | 1-16 | |
| A | "FERNSEHBILDER ALS DATENTRAGER" FUNKSCHAU, WEKA FACHZEITSCHRIFTEN VERLAG, POING, DE, vol. 60, no. 20, 23 September 1988 (1988-09-23), pages 32-36, XP000045248 ISSN: 0016-2841 * the whole document * ----- | 1-16 | |

TECHNICAL FIELDS SEARCHED (IPC)

H04N

The present search report has been drawn up for all claims

| Place of search | Date of completion of the search | Examiner |
|---|---|---|
| Berlin | 9 February 2006 | Blais, D |

EPO FORM 1503 03.82 (P04C01)

## ANNEX TO THE EUROPEAN SEARCH REPORT
## ON EUROPEAN PATENT APPLICATION NO.

EP 05 42 5237

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2006

| Patent document cited in search report | | Publication date | Patent family member(s) | | Publication date |
|---|---|---|---|---|---|
| US 2001017892 | A1 | 30-08-2001 | AU 1469400 A<br>TW 448691 B<br>WO 0028736 A1<br>US 6215526 B1 | | 29-05-2000<br>01-08-2001<br>18-05-2000<br>10-04-2001 |
| US 6008857 | A | 28-12-1999 | US 5719634 A | | 17-02-1998 |
| DE 10133600 | A1 | 30-01-2003 | NONE | | |

EPO FORM P0459

For more details about this annex : see Official Journal of the European Patent Office, No. 12/82